# EUROPEAN PATENT APPLICATION

(11) **EP 4 593 260 A1**
(43) Date of publication of application: **30.07.2025**
(21) Application number: 24154038.4
(22) Date of filing: 25.01.2024
(51) Int. Cl.: H02K 1/32

(54) **A ROTOR FOR AN ELECTRIC MOTOR**

(71) Applicant: Polestar Performance AB, 405 31 Gothenburg (SE)
(72) Inventor: BERGSTRÖM, Victor, 416 74 Göteborg (SE); PERSSON, Tony, 416 52 Göteborg (SE)
(74) Representative: Zacco Sweden AB

(57) **Abstract**

The present disclosure relates to a rotor (1) for an electric motor comprising an annular rotor core (2) comprising a plurality of axially extending rotor poles (2a) distributed about an outer circumference (3) of said annular rotor core (2). Further, the rotor (1) comprises at least one first radial channel (15a) being arranged to radially transfer cooling medium, wherein each first radial channel (15a) is formed in at least one of a first end plate and a first end-face (10, 20) of the rotor (1), wherein the annular rotor core (2) further comprises at least one axially extending transportation channel (25), each of the at least one transportation channels (25) being connected to a corresponding first radial channel (15a) of said at least one first radial channels (15a).

## Description

### TECHNICAL FIELD

The present disclosure relates to a rotor for an electric motor, an electric motor comprising such a rotor and an electric vehicle.

### BACKGROUND

Electrically excited rotors which comprise a winding arrangement distributed about their core are beneficial for several reasons. For example, they are more environmental friendly compared to rotors having permanent magnets.

However, efficient cooling is crucial for rotors with winding arrangements due to the inherent heat generated during their operation. Insufficient cooling poses a serious risk to the performance and longevity of the rotor. As the windings heat up, several problems can arise. For example, excessive heat can cause the insulation material around the windings to degrade over time. This degradation may result in insulation failure, leading to short circuits or even electrical arcing between adjacent windings.

Accordingly, efficient cooling mechanisms, such as fans or liquid cooling systems, play an important role in dissipating the excess heat generated by the winding arrangement and other parts of the rotor such as the rotor core and the rotor shaft. These systems help maintain the operating temperature within safe limits, preventing the detrimental effects of overheating.

Cooling mechanisms of the present art work well in some situations and there are a variety of cooling mechanisms for rotors that enable the rotors to be cooled.

Nonetheless, cooling mechanisms of the present art fail to cool the rotor efficiently. Specifically, the cooling mechanisms of the present art distribute the cooling medium suboptimal, which leads to an uneven and inefficient cooling of the rotor.

Based on the aforementioned, there is a need for a rotor which comprises mechanisms or means that enable it to transfer cooling medium in a manner that results in a more efficient cooling and/or a more even cooling.

Therefore it would be desirable to provide a rotor which is arranged to provide a more efficient and/or even cooling of the rotor.

### SUMMARY

It is therefore an object of the present disclosure to alleviate at least some of the mentioned drawbacks to provide a rotor which is arranged to allow a more efficient and/or even cooling. Further, the present disclosure provides an electric motor comprising such a rotor and an electric vehicle comprising such an electric motor.

The present disclosure is at least partly based on the insight that the rotor herein can provide a better cooling compared to conventional rotors as it comprises radial channels coupled to axial transportation channels.

The present disclosure relates to a rotor for an electric motor comprising an annular rotor core comprising a plurality of axially extending rotor poles distributed about an outer circumference of said annular rotor core. Specifically, the rotor poles protrude radially away from the rotor core and extend axially along the rotor core. The rotor further comprising at least a first end-plate being arranged to enclose a first end-face of the rotor core. Further, the rotor shaft is accommodated/enclosed by the rotor core. Further, the rotor comprises at least one first radial channel, each of the at least one first radial channels being arranged to radially transfer cooling medium, wherein each first radial channel is formed in at least one of the first end plate and the first end-face. The annular rotor core further comprises at least one axially extending transportation channel, each of the at least one transportation channels being connected to a corresponding first radial channel of said at least one first radial channels so that fluid can flow between radial channels and transportation channels.

An advantage of the rotor herein is that cooling medium can be transferred radially and axially, thereby providing efficient cooling close to the heatsource to both the rotor winding overhang and along the active length of the rotor. Accordingly, a more efficient and even cooling is obtained.

As disclosed, each first radial channel may be formed in at least one of the first end plate and the first end-face. Hence, each radial channel may in some aspects be formed in the first end plate and the first end-face such that it forms a first indentation structure in said first end face and a second indentation structure in said first end plate, wherein upon attaching the first end plate to the first end face, the first and second indentation structures may be arranged to mate to form the at least one radial channel. Hence, each indentation structure of the first and second indentation structures may form an open channel forming e.g. a half-circular cross-section. Attachment of the first end plate and the first end-face may mate the indentations so that they form one or more sealed radial channels ("sealed" meaning that any cooling medium will not be leaked into surrounding portions of the radial channels when flowing therein).

The at least one first radial channel may be a plurality of first radial channels, wherein the at least one transportation channel is a plurality of axially extending transportation channels circumferentially distributed around said rotor core. Each transportation channel of said plurality of transportation channels being connected to a corresponding first radial channel of said plurality of first radial channels. The plurality of first radial channels may be distributed evenly around the end-face/end-plate. In other words, the first radial channels may extend from a circular perimeter of the end-face/end-plate in which they are evenly distributed about said circular perimeter.

An advantage of this is that the cooling medium is more evenly distributed about the area of the rotor.

The rotor may further comprise a second end-plate arranged to enclose a second end-face of the rotor core, opposite the first end-face. Further, at least one second radial channel may in some aspects be formed in at least one of the second end-plate and the second end-face. The at least one transportation channel then connects a corresponding first radial channel of said at least one first radial channels to a corresponding second radial channel of said at least one second radial channels. Within the context of the present disclosure any feature of any first radial channel may be correspondingly comprised by any second radial channel.

An advantage of this is that the cooling medium is able to circulate between opposing end-faces of the rotor and therebetween.

The at least one second radial channel may be a plurality of second radial channels. Further, each transportation channel of said plurality of transportation channels is connected between a corresponding first radial channel of said plurality of first radial channels and a corresponding second radial channel of said plurality of second radial channels.

The connection may be a connection that enables fluidic communication between the first radial channels and corresponding transportation channels and second radial channels.

Each radial channel may comprise a first fluid opening at an inner circle portion of said rotor and a second fluid opening at an outer circle portion of said rotor. The second fluid opening of each of the at least one radial channels may be in fluid flow communication with a corresponding transportation channel. The inner circle portion may be an inner periphery of said rotor end-face and/or rotor end-plate such that cooling medium is enabled to directly be provided from an interior of the rotor shaft to the radial channels.

In other words, the inner circle opening may be in fluid flow communication with said rotor shaft.

Advantageously, the rotor shaft can provide cooling medium to a plurality of radial channels in a convenient manner.

The plurality of transportation channels may comprise a first and a second set of transportation channels, the first set being interleaved with the second set, the first set being arranged to transfer said cooling medium in a first direction, the second set being arranged to transfer cooling medium in a second direction, the first and the directions being opposite directions.

If cooling medium is only transferred in one direction (axially), its temperature may be increased (by heat dissipation) at an end of its (axial) path. Consequently, the end of the path will have less cooling than the "beginning" of the path. Accordingly, by having interleaved transportation channels that transfer cooling medium oppositely relative each other, a more even cooling of the rotor core is provided.

The rotor shaft may be hollow rotor shaft having a rotor shaft interior. The rotor shaft interior may be arranged to transfer said cooling medium in a first and a second opposite flow path, the first flow path may be in fluid flow communication with the at least one first radial channel and the second path may be in fluid flow communication with the at least one second radial channels, thereby enabling the plurality of transportation channels to transfer said cooling medium in opposite directions.

The first set of transportation channels may be associated with said first flow path, the second set of transportation channels may be associated with said second flow path. Each of the plurality of transportation channels extend along a depth of the rotor. Preferably substantially along a full depth thereof (i.e. at least 80% of the full depth). Each transportation channel may further comprise, at an end thereof, an output opening for ejecting said cooling medium away from said rotor.

Each first radial channel may be in fluid flow communication with a corresponding second radial channel via a corresponding transportation channel. Each first radial channel may be arranged to receive said cooling medium in said first fluid opening thereof, and each second radial channel may be arranged to output said cooling medium from said first fluid opening thereof.

Advantageously, the cooling medium will be allowed to be circulated radially along both end-faces of the rotor.

Each, or at least some of the radial channels may form a curved trajectory. The curved trajectory may be a meandering (sinuous and/or zigzag) trajectory.

An advantage of this is that the cooling medium will be allowed to circulate along a larger area of the end-face/endplate.

Each transportation channel of the at least one transportation channels may be associated with said outer circumference of the rotor and positioned between adjacent poles of said plurality of poles. Accordingly, each transportation channel may be positioned in a corresponding cavity formed between adjacent poles. The transportation channels may be defined in a filling material/filling device within said cavity.

Thereby, the transportation channels will not increase the size of the rotor radially.

The rotor may further comprise a winding arrangement wound around the plurality of rotor poles. The winding arrangement may be wound axially. The winding arrangement may be configured to receive direct current, DC.

The present disclosure further relates to an electric motor comprising the rotor according to any aspect herein.

Furthermore, the present disclosure relates to an electric vehicle comprising such an electric motor.

### BRIEF DESCRIPTION OF THE DRAWINGS

These and other features and advantages of the present disclosure will now be further clarified and described in more detail, with reference to the appended drawings;
- Figure 1: illustrates an objective view of a rotor with an exploded end-plate;
- Figure 2: illustrates a side view of a rotor in which part of the rotor shaft is cut-out in accordance with some aspects of the present disclosure;
- Figure 3: illustrates schematically an objective view of a rotor with arrows depicting a flowpath of cooling medium in accordance with some aspects of the present disclosure;
- Figure 4: illustrates a front cross-sectional view of a rotor core of a rotor in accordance with some aspects of the present disclosure;
- Figure 5: illustrates schematically an objective view of a rotor with arrows depicting a flowpath of cooling medium in accordance with some aspects of the present disclosure;
- Figure 6: illustrates a front cross-sectional view of a rotor, wherein first radial channels are depicted in accordance with some aspects of the present disclosure;
- Figure 7: illustrates an objective view of an end-plate of a rotor in accordance with some aspects of the present disclosure;
- Figure 8A: illustrates an objective view of a rotor in accordance with some aspects of the present disclosure;
- Figure 8B: illustrates an objective view of a rotor without an end-plate in accordance with some aspects of the present disclosure;
- Figure 9: illustrates a side-schematical view of a vehicle in accordance with some aspects of the present disclosure.

### DETAILED DESCRIPTION

In the following detailed description, some embodiments of the present disclosure will be described. However, it is to be understood that features of the different embodiments are exchangeable between the embodiments and may be combined in different ways, unless anything else is specifically indicated. Even though in the following description, numerous specific details are set forth to provide a more thorough understanding of the present disclosure, it will be apparent to one skilled in the art that the present disclosure may be practiced without these specific details. In other instances, well known constructions or functions are not described in detail, so as not to obscure the present disclosure.

It is also to be understood that the terminology used herein is for purpose of describing particular aspects only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a structure" or "the structure" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. More specifically, the wording "one or more" of a set of elements (as in "one or more of A, Band C" or "at least one of A, B and C") is to be interpreted as either a conjunctive or disjunctive logic. Put differently, it may refer either to all elements, one element or combination of two or more elements of a set of elements. For example, the wording "A, B and C" may be interpreted as A or B or C, A and B and C, A and B, B and C, or A and C.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

The term "electric vehicle" as used herein may refer to an all-electric vehicle, also referred to as an EV. Further, the term "electric vehicle" may refer to a plug-in hybrid vehicle, also referred to as a PHEV. Further, the term "electric vehicle" may refer to a hybrid vehicle, also referred to as a HEV, where a hybrid vehicle refers to a vehicle utilizing multiple propulsion sources one of which is an electric drive system.

The term "winding overhang" may refer to end-turns of a winding of a rotor and/or to portions of the winding extending beyond the depth of the rotor core axially.

The term "rotor" herein may refer to an electrically excited rotor having windings being magnetized by an external electrical source. Accordingly, the windings may receive direct current (DC) to simulate a permanent magnetic field.

The term "radially" may refer to a direction perpendicularly outward from a central point or axial axis, specifically a central axis of a circular structure. For instance, if a line is drawn from a center of a circle to its circumference or from its circumference outwards, those lines may be considered as extending radially.

The term "axially" may refer to a direction along or parallel to an axial axis or central line. Specifically, parallel to or along a central line or axis of a circular structure.

The term "end-face" may refer to an end-disc enclosing winding overhangs wound around the rotor core or the term "end-face" may refer to a base of the rotor core. I.e. the term "end-face may be either a part that is integral with the rotor core or a part that is arranged to connect to the rotor core. Accordingly, a depth of the rotor core laminate may be defined by a distance between opposite bases thereof.

The term "end-plate" may refer to an end disc serving to enclose the end-face of the rotor.

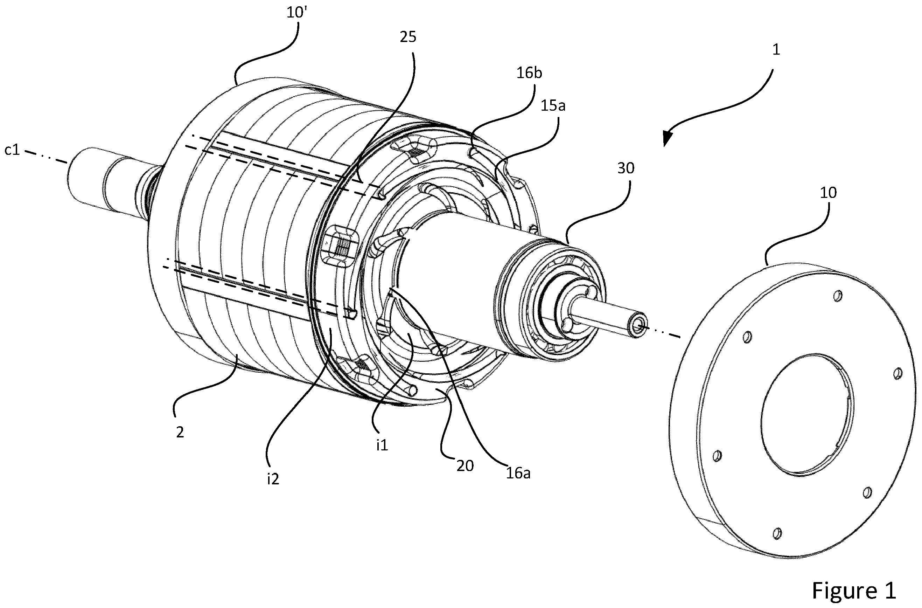

Figure 1 illustrates a rotor 1 for an electric motor from an objective view. The rotor 1 may be an electrically excited rotor arranged to be excited by DC power to simulate a permanent magnetic field arranged to interact with a stator. Figure 1 illustrates that the rotor 1 comprises an annular rotor core 2 comprising a plurality of axially extending rotor poles (not numbered in Figure 1) distributed about an outer circumference of said annular rotor core 2. Further, Figure 1 illustrates that the rotor 1 comprises at least a first end-plate 10 being arranged to enclose a first end-face 20 of the rotor core 2. The end-plate 10 illustrated in Figure 1 is exploded relative the rotor core 2. Further, the rotor 1 comprises a rotor shaft 30 accommodated by the rotor core 2. In other words, the rotor core 2 circumferentially encloses the rotor shaft 30. Moreover, Figure 1 illustrates that the rotor 1 comprises at least one first radial channel 15a. In Figure 1, the rotor 1 comprises a plurality of first radial channels 15a. Each of the at least one first radial channels 15a being arranged to radially transfer cooling medium, wherein each first radial channel 15a is formed in at least one of the first end plate and the first end-face 10, 20. In Figure 1, it is illustrated that the first radial channels 15a are formed as an indentation structure in an outer surface of the end-face 20. Accordingly, the end-plate 10 is arranged to mate with the end-face to close/seal the first radial channels 15a.

In some aspects, the end plate 10 also comprises an indentation structure dimensioned to mate with the indentation structure of the end-face such that the indentation structures jointly form the first radial channels 15a.

Figure 1 further illustrates that the annular rotor core 2 further may comprise at least one axially extending transportation channel 25, each of the at least one transportation channels 25 being (fluidically) connected to a corresponding first radial channel 15a of said at least one first radial channels 15a. Accordingly, each transportation channel 25 extends along the axial axis c1 of the rotor 1. Therefore, each first radial channel 15a may receive cooling medium (from e.g. an interior of the rotor shaft 30) and transport the cooling medium radially outwards from said rotor shaft 30 to a corresponding transportation channel 25.Thereby, cooling medium can be transferred both radially and axially. The cooling medium may be any suitable cooling medium for cooling the rotor, such as oil. The cooling medium may be outputted from a reservoir connected to a pump device arranged to enable the cooling medium to flow into the rotor 1, via e.g. a nozzle connected to the rotor shaft 30.

The transportation channels 25 may, as illustrated in Figure 1, each extend between opposite end-plates 10, 10' of the rotor 1.

Figure 1 further illustrates that the rotor 1 may comprise a plurality of first radial channels 15a and a plurality of axially extending transportation channels 25 circumferentially distributed around said rotor core 2. Each transportation channel 25 of said plurality of transportation channels 25 is then connected to a corresponding first radial channel 15a of said plurality of first radial channels 15a.

Figure 1 further illustrates that each radial channel 15a may comprise a first fluid opening 16a at an inner circle portion i1 of said rotor 1 and a second fluid opening 16b at an outer circle portion i2 of said rotor 1. The second fluid opening 16b of each of the at least one radial channels 15a, 15b may be in fluid flow communication with a corresponding transportation channel 25. The second fluid opening 16b may be directly connected to a corresponding transportation channel 25. As illustrated in Figure 1 the path of each first radial channel 15a may be perpendicular to the path of each transportation channel 25. The first fluid opening 16a may be in direct or indirect connection to an opening of the rotor shaft 30 such that cooling medium can flow into the first fluid opening 15a from the rotor shaft 30 and radially away from the rotor shaft 30 to arrive to the second fluid opening 16b, wherein the cooling medium is transferred to the transportation channel 25 via said second fluid opening 16b.

Each transportation channel 25 may span over a portion of the rotor 1 which is associated with an outer circumference of the rotor 1. As illustrated in Figure 1, each transportation channel 25 may be formed within the rotor core 2 (exterior of the rotor shaft 30). Each transportation channel 25 may comprise an end from which the cooling medium is ejected out from.

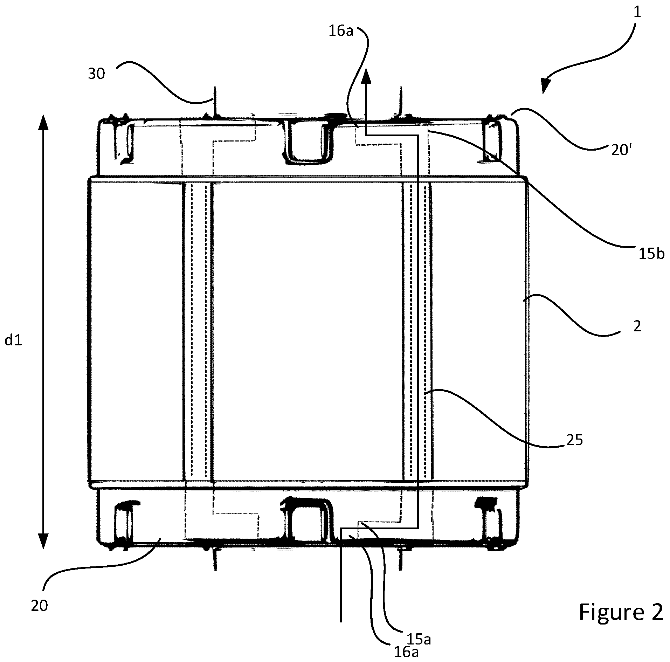

Figure 2 illustrates a top view of a part of a rotor 1 which the rotor shaft 30 is partially shown. The rotor 1 comprises a first and a second end-face 20, 20'. The second end face 20' being opposite the first 20.

Figure 2 illustrates that at least one second radial channel 15a may be formed in the second end-face 20'. Accordingly, Figure 2 illustrates that the at least one transportation channel 25 may connect a corresponding first radial channel 15a of said at least one first radial channels 15a to a corresponding second radial channel 15b of said at least one second radial channels 15b.

Specifically, Figure 2 illustrates a (first) aspect of the present disclosure in which each first radial channel 15a is in fluid flow communication with a corresponding second radial channel 15b via a corresponding transportation channel 25. Hence, each first radial channel 15a may be arranged to receive said cooling medium in said first fluid opening 16a thereof, and each second radial channel 15b is arranged to output said cooling medium from said first fluid opening thereof 16a as indicated by the arrow in Figure 2.

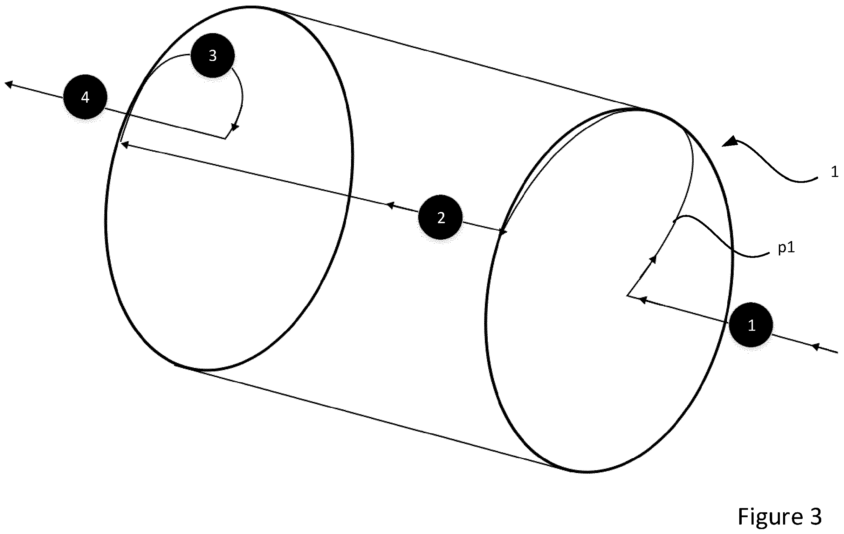

Figure 3 illustrates a schematics of such an aspect from an objective view. Accordingly, Figure 3 illustrates a path p1 of cooling medium along the rotor 1, the arrows and numbering (1-4) in Figure 3 depict the route the cooling medium travels along said path p1. Specifically, the path p1 as illustrated in Figure 3 insinuates that each first radial channel (see 15a in Figure 2) may receive cooling medium (at an inner circle portion i1, see Figure 1) of the rotor 1. Further, the first radial channel may transfer the cooling medium radially outwards (i.e. radially away from an axial axis of the rotor) to a transportation channel (see reference numeral 25 in Figure 2). Further, the cooling medium travels along the depth of the rotor 1 via the transportation channel. Further, the cooling medium flows into a corresponding second radial channel 15b (see Figure 2) at an outer circle portion of the rotor 1 and can thereby travel radially (see number 3 in Figure 3) towards an inner circle portion of the rotor (i.e. radially towards an axial axis of the rotor 1) from which it is ejected away from the rotor (see number 4 in Figure 3).

Accordingly, the rotor 1 may comprise means that enable cooling medium to travel radially to be proximate winding overhangs of both opposite bases of the rotor 1 while also enable the cooling medium to travel along the circumference of the rotor core. Thereby, a great area of the rotor 1 can be cooled by the cooling medium. It should be noted that the first and the second radial channels may generally have the same structure and features. Even though Figure 3 illustrates that the cooling medium travels along one first radial channel, one transportation channel and one second radial channel. The present disclosure, in some aspects comprises a plurality of second radial channels, wherein each transportation channel of said plurality of transportation channels is connected between a corresponding first radial channel of said plurality of first radial channels and a corresponding second radial channel of said plurality of second radial channels.

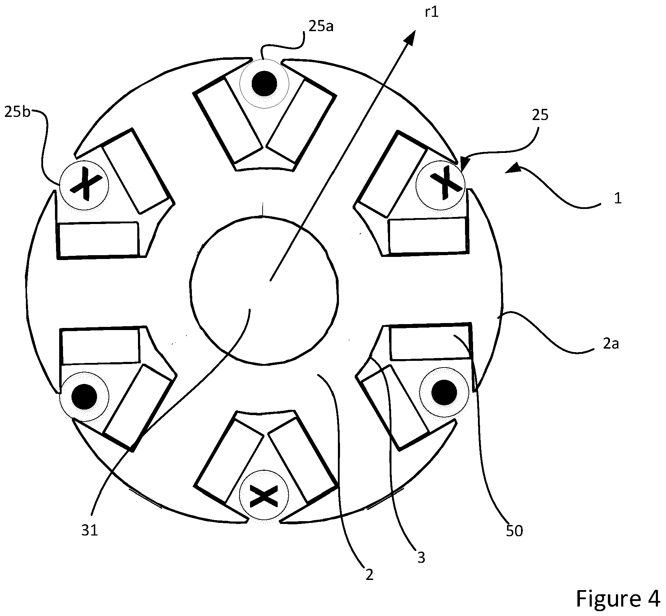

Figure 4 illustrates another (second) aspect of the present disclosure. Figure 4 illustrates a rotor 1 from a cross-sectional front view having a plurality of transportation channels 25. The plurality of transportation channels 25 comprising a first and a second set of transportation channels 25a, 25b, the first set 25a being interleaved with the second set 25b. In other words, e.g. every other transportation channel may be a transportation channel 25a of the first set and every other may be a transportation channel of the second set 25b.

The first set 25a being arranged to transfer said cooling medium in a first direction, the second set 25b being arranged to transfer cooling medium in a second direction, the first and the directions being opposite directions. The cooling medium may be transferred/circulated from the rotor shaft interior 31 (in any aspect of the present disclosure). The rotor shaft interior 31 may be dimensioned/arranged to transfer said cooling medium in a first and a second opposite flow path, wherein the first flow path is in fluid flow communication/connected to the at least one first radial channels wherein the second path is in fluid flow communication with the at least one second radial channels, thereby enabling the plurality of transportation channels to transfer said cooling medium in opposite directions (which is indicated by the O/X symbols within each transportation channel 25).

Figure 4 further illustrates that each transportation channel 25 may be associated with/be adjacent to said outer circumference 3 and positioned between adjacent poles 2a of said plurality of poles 2a. In other words, each pole 2a may extend radially along a radial axis r1 away from the rotor circumference 3. Each transportation channel 25 may be provided within a structure/mass that is arranged to seal a space between adjacent poles 2a. Accordingly, each transportation channel 25 may be formed within a potting that seals the space between adjacent poles or within a wedge that is arranged to seal the space between adjacent poles 2a. Each pole 2a may have a pole neck and a pole hat. Further, Figure 4 illustrates six poles circumferentially distributed evenly about the core 2. However, the rotor 1 may comprise less or more rotor poles 2a. As further illustrated in Figure 4, there is a winding arrangement 50 wound around each pole. As illustrated in Figure 4, the amount of transportation channels 25 may be equal to the amount of rotor poles 2a.

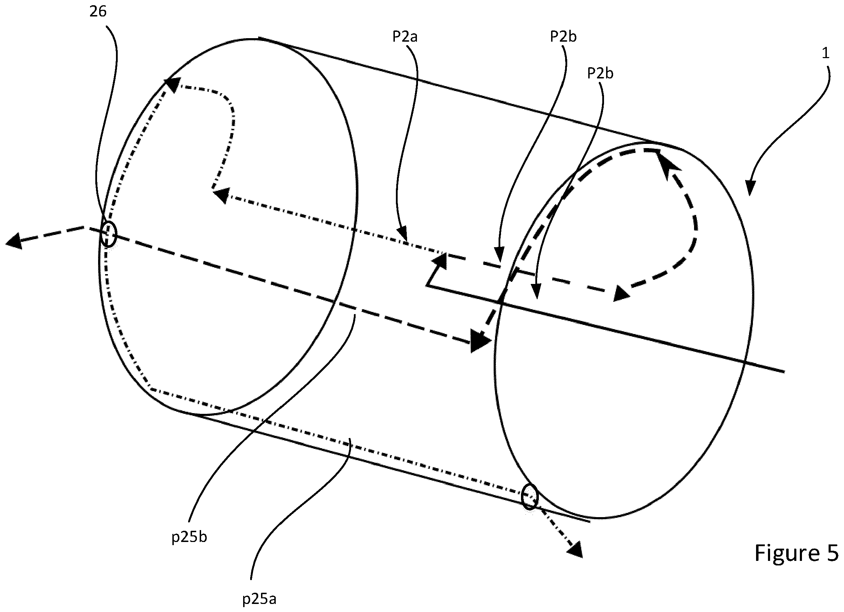

Figure 5 illustrates schematics of the second aspect from an objective view. Specifically, Figure 5 illustrates that the rotor shaft interior (not numbered in Figure 5) may be dimensioned/arranged to transfer said cooling medium in a first and a second opposite flow path p2a, p2b, wherein the first flow path p2a is in fluid flow communication/connected to at least one first radial channel wherein the second path p2b is in fluid flow communication with/connected to at least one second radial channel (the first and second radial channels being positioned on opposite sides of the rotor core) such that the first radial channel(s) receives cooling medium transferred along the first flow path p2a and the second radial channel(s) receive cooling medium transferred along the second flow path p2b, thereby enabling the plurality of transportation channels to transfer said cooling medium in opposite directions (along opposite routes p25a/p25b). Accordingly, referring now to Figure 4 again, the first set of transportation channels 25a may be connected to said first radial channels and said second set of transportation channels 25b may be connected to said second radial channels. Accordingly, the first flow path may be flowing through the first radial channels 15a and first set of transportation channels 25a (and ejected out from the rotor 1), the second flow path may be flowing through the second radial channels 15b and second set of transportation channels 25b (and ejected out from the rotor 1). This is illustrated in Figure 5 by the reference numerals p25a and p25a which depicts the flow paths along the transportation channels. Accordingly, as illustrated the flow paths along the transportation channels (p25a, p25b) are opposite relative each other. Figure 5 further illustrates that the flow path along each transportation channel p25a, p25b may end at an output opening 26 thereof for ejecting said cooling medium away from said rotor 1. Each transportation channel may therefore have a linear extension (preferably in-between adjacent rotor poles) for transferring cooling medium along the depth of the rotor 1 to eject said cooling medium at an end of said straight extension. The cooling medium may be split into said flow paths p2a, p2b by a specific dimensioning of a nozzle which outputs said cooling medium into the rotor shaft and/or by a specific dimensioning of the rotor shaft interior (i.e. specific channels therein).

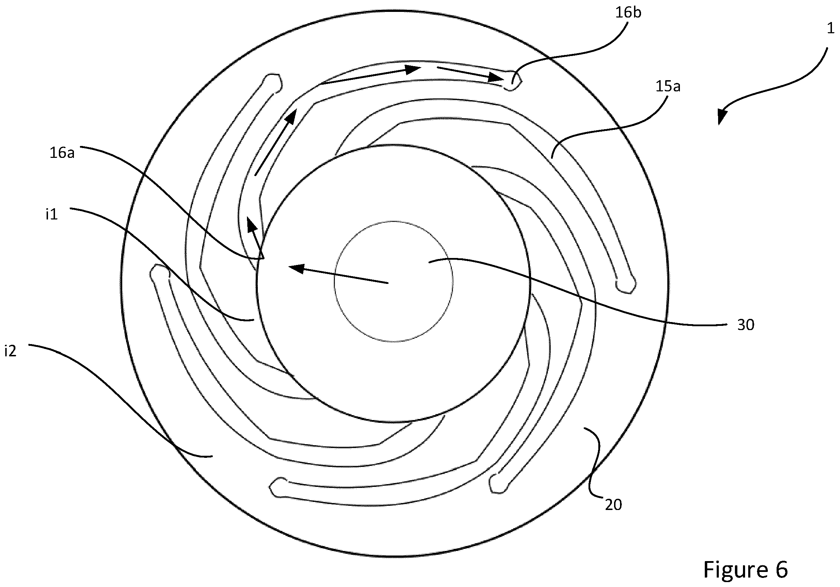

Figure 6 illustrates a front view of the rotor 1 in accordance with some aspects of the present disclosure. Figure 6 further illustrates that each channel 15a may form a curved trajectory upon its extension from an inner circle portion i1 to an outer circle portion i2. Also, Figure 6 illustrates that the radial channels 15a may be distributed about a common perimeter of the end-face/end-plate.

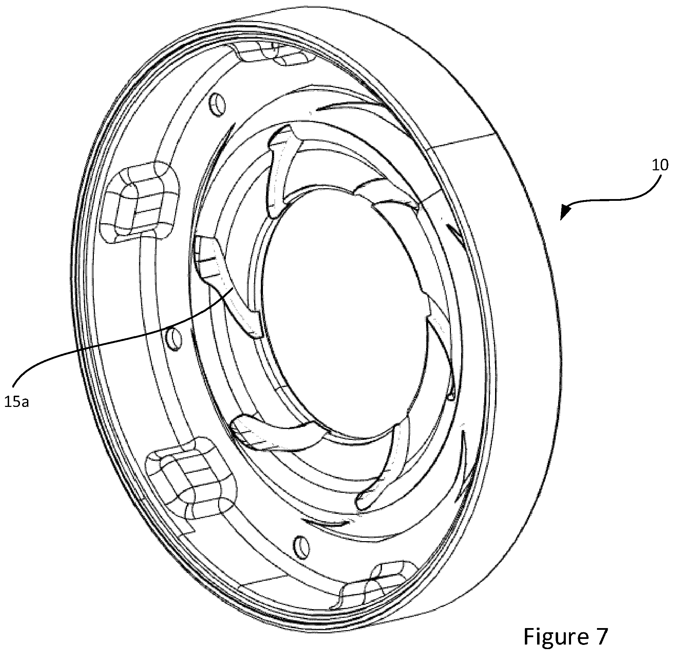

Figure 7 illustrates an objective view of an end plate 10. Figure 7 illustrates that the end plate 10 may comprise first radial channels 15a. The first radial channels may be formed as an indentation structure which may be sealed against and end face of a rotor core. The end plates 10, 10' may be formed by a metal. In some aspects, the end-face of the rotor core may comprise corresponding first radial channels 15a, wherein the first radial channels 15a of the end-plate 10 are arranged to mate with the corresponding first radial channels of the end-face to jointly form common radial channels.

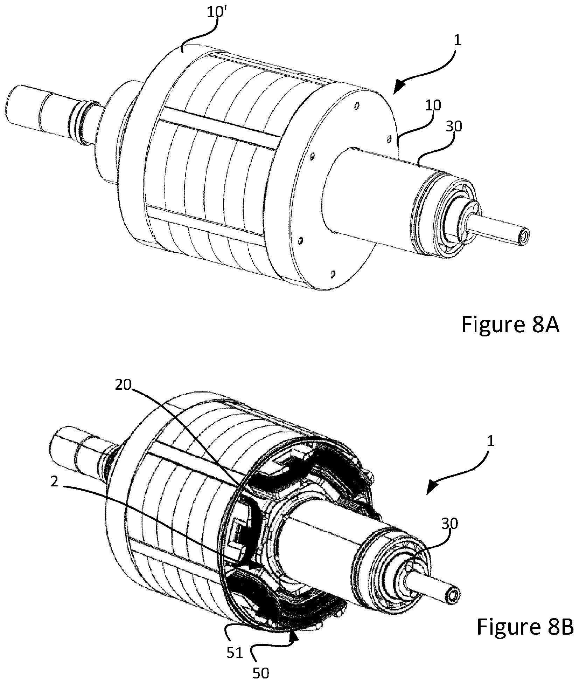

Figure 8A illustrates an objective view of a rotor 1 comprising a first and an opposite second end plate 10, 10'. The rotor 1 further comprising a rotor shaft 30. The end-plates 10, 10' may be attached to the end-face by press-fit and/or fastening means (screws, adhesives or the like).

Figure 8B illustrates an objective view of a rotor 1 in which the end plate 10 is removed. Hence, a winding arrangement 50 is seen. Specifically, winding overhang 51 of the winding arrangement is seen. Accordingly, the end face 20 is illustrated. In figure 8B, the end face 20 is integral with the rotor core 2. However, in other aspects such as the one illustrated in Figure 1, the end face 20 may be a part which is arranged to enclose the winding overhang 51 of the rotor 1.

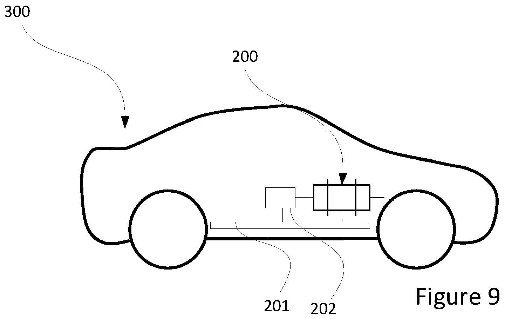

Figure 9 illustrates an electric vehicle 300 which comprises an electric motor 200, the electric motor 200 may comprise the rotor 1 according to any aspect herein. The electric motor may also comprise a stator accommodating the rotor. Moreover, as appreciated by a skilled person in the art the electric motor 200 may comprise a battery pack 201 and inverter 202 and other circuitry such as an electronic control unit, battery management system etc.

## Claims

1. A rotor (1) for an electric motor comprising:
- an annular rotor core (2) comprising a plurality of axially extending rotor poles (2a) distributed about an outer circumference (3) of said annular rotor core (2);
- at least a first end-plate (10) being arranged to enclose a first end-face (20) of the rotor core (2);
- a rotor shaft (30) accommodated by the rotor core (2);
- at least one first radial channel (15a), each of the at least one first radial channels (15b) being arranged to radially transfer cooling medium, wherein each first radial channel (15a) is formed in at least one of the first end plate and the first end-face (10, 20);
wherein the annular rotor core (2) further comprises at least one axially extending transportation channel (25), each of the at least one transportation channels (25) being connected to a corresponding first radial channel (15a) of said at least one first radial channels (15a).

2. The rotor according to claim 1, wherein the at least one first radial channel (15a) is a plurality of first radial channels (15a),
wherein the at least one transportation channel (25) is a plurality of axially extending transportation channels (25) circumferentially distributed around said rotor core (2),
each transportation channel of said plurality of transportation channels (25) being connected to a corresponding first radial channel (15a) of said plurality of first radial channels (15a).

3. The rotor according to any one of the claims 1 or 2, wherein the rotor further comprises a second end-plate (10') arranged to enclose a second end-face (20') of the rotor core (2), opposite the first end-face (20'),
wherein at least one second radial channel (15a) is formed in at least one of the second end-plate and the second end-face (10', 20')
wherein said at least one transportation channel (25) connects a corresponding first radial channel (15a) of said at least one first radial channels (15a) to a corresponding second radial channel (15b) of said at least one second radial channels (15b).

4. The rotor (1) according to claims 2 and 3, wherein the at least one second radial channel (15b) is a plurality of second radial channels (15b), wherein each transportation channel (25) of said plurality of transportation channels (25) is connected between a corresponding first radial channel (15a) of said plurality of first radial channels (15a) and a corresponding second radial channel (15b) of said plurality of second radial channels (15b).

5. The rotor (1) according to any one of the preceding claims, wherein each radial channel (15a, 15b) comprises a first fluid opening (16a) at an inner circle portion (i1) of said rotor (1) and a second fluid opening (16b) at an outer circle portion (i2) of said rotor (1), wherein the second fluid opening (16b) of each of the at least one radial channels (15a, 15b) is in fluid flow communication with a corresponding transportation channel (25).

6. The rotor (1) according to claim 5, wherein the inner circle opening (16a) is in fluid flow communication with said rotor shaft (30).

7. The rotor (1) according to claim 1, wherein the plurality of transportation channels (25) comprises a first and a second set of transportation channels (25a, 25b), the first set (25a) being interleaved with the second set (25b), the first set (25a) being arranged to transfer said cooling medium in a first direction, the second set being arranged to transfer cooling medium in a second direction, the first and the directions being opposite directions.

8. The rotor (1) according to claim 7, wherein the rotor further comprises a second end-plate (10') arranged to enclose a second end-face (20') of the rotor core (2), opposite the first end-face (20'),
wherein at least one second radial channel (15a) is formed in at least one of the second end-plate and the second end-face (10', 20') wherein the rotor shaft (30) is a hollow rotor shaft having a rotor shaft interior (31),
wherein the rotor shaft interior (31) is arranged to transfer said cooling medium in a first and a second opposite flow path,
wherein the first flow path is in fluid flow communication with the at least one first radial channels (15a);
wherein the second path is in fluid flow communication with the at least one second radial channels (15b), thereby enabling the plurality of transportation channels (25) to transfer said cooling medium in opposite directions.

9. The rotor (1) according to claim 8, wherein the first set of transportation channels (25a) being associated with said first flow path, the second set of transportation channels (25b) being associated with said second flow path,
wherein each of the plurality of transportation channels (25) extend along a depth (d1) of the rotor (1), preferably substantially along a full depth thereof;
wherein preferably, each transportation channel (25) comprises an output opening (26) for ejecting said cooling medium away from said rotor (1).

10. The rotor (1) according to claims 2-5, wherein each first radial channel (15a) is in fluid flow communication with a corresponding second radial channel (15b) via a corresponding transportation channel (25), wherein each first radial channel (15a) is arranged to receive said cooling medium in said first fluid opening (16a) thereof, and each second radial channel (15b) is arranged to output said cooling medium from said first fluid opening thereof (16a).

11. The rotor (1) according to any one of the preceding claims, wherein each radial channel form a curved trajectory.

12. The rotor (1) according to any one of the preceding claims, wherein each transportation channel of the at least one transportation channel (25) is associated with said outer circumference (3) and positioned between adjacent poles (2a) of said plurality of poles (2a).

13. The rotor (1) according to any one of the preceding claims, wherein the rotor (1) comprises a winding arrangement (50) wound around the plurality of rotor poles (2a).

14. An electric motor (200) comprising the rotor according to any one of the claims 1-13.

15. An electric vehicle (300) comprising the electric motor (200) according to claim 14.
